**Europäisches Patentamt**

**European Patent Office**

**Office européen des brevets**

(11) Veröffentlichungsnummer: **0 299 210 B1**

(12) **EUROPÄISCHE PATENTSCHRIFT**

(45) Veröffentlichungstag der Patentschrift: **25.09.91**

(21) Anmeldenummer: **88109416.3**

(22) Anmeldetag: **14.06.88**

(51) Int. Cl.⁵: **B23K 7/00, B22D 11/126**

㊴ Brennschneidmaschine zum Schneiden von Werkstücken.

(30) Priorität: **11.07.87 DE 3723003**

(43) Veröffentlichungstag der Anmeldung:
**18.01.89 Patentblatt 89/03**

(45) Bekanntmachung des Hinweises auf die
Patenterteilung:
**25.09.91 Patentblatt 91/39**

(84) Benannte Vertragsstaaten:
**AT GB IT**

(56) Entgegenhaltungen:
**EP-A- 0 120 114**
**DD-A- 238 557**

(73) Patentinhaber: **MESSER GRIESHEIM GMBH**
**Hanauer Landstrasse 330**
**W-6000 Frankfurt/Main(DE)**

(72) Erfinder: **Apitz, Jürgen**
**Kehlerstrasse 15**
**W-6450 Hanau(DE)**
Erfinder: **Schmunck, Karlheinz**
**Mozartstrasse 27**
**W-6052 Mühlheim/Main(DE)**

**Beschreibung**

Die Erfindung betrifft eine Brennschneidmaschine zum Schneiden von Werkstücken, insbesondere von Stranggußstücken, mit mindestens zwei Schneidbrennern.

Strang-Brennschneidmaschinen dienen zum Teilen von kontinuierlich gegossenem Strangguß in vorgegebene Teillängen mittels Schneidbrenner. Häufig werden Strangbrennschneidanlagen mit einer zusätzlichen Probenschneideinrichtung ausgerüstet. Dies ist ein dicht vor oder hinter dem Hauptbrenner angeordneter zweiter Brenner oder bei zwei gegeneinander schneidenden Hauptbrennern ein unmittelbar vor oder hinter den beiden Hauptbrennern angeordnetes zweites Brennerpaar. Da die Proben im allgemeinen 50 bis 150 mm lang sein sollen, sind die Probenschneidbrenner auf einem kleinen Schlitten, manuell oder motorisch betätigt, in ihrem Abstand zu den Hauptbrennern einstellbar (Messer Griesheim-Sonderdruck 01/86, "Autogenes Brennschneiden in Stranggieß- und Längsteilanlagen", Sachnr. 0.811.743).

Aus der europäischen Patentanmeldung 0189554 ist eine Probenschneideinrichtung bekannt, bei der der Probenschneidbrenner entsprechend der gewünschten Probendicke verschwenkt werden kann.

Bei der Brennschneidmaschine gemäß der DE-3429124 C1 sind zur Verringerung der Rüstzeit an einem Brenneraggregat drei Brenner angeordnet, von denen jeder einzeln in der Höhe verstellbar und nacheinander in Einsatz bringbar ist.

Bei den dicht vor oder nebeneinander angeordneten Schneidbrennern führen die durch den im Einsatz befindlichen Schneidbrenner erzeugten Schlacke- und Abbrandspritzer zu einer Verschmutzung bzw. Beschädigung der benachbarten Düsen. Um ein Anhaften der Schlacke- und Abbrandspritzer an den benachbarten Düsen zu vermeiden, ist es möglich, die nicht im Einsatz befindlichen Schneidbrenner mittels einer vertikalen Hubeinrichtung (DE 3429124 C1) oder mittels einer horizontalen Hub- oder Schwenkeinrichtung (EP 0189554 A1) aus dem Bereich des im Einsatz befindlichen Schneidbrenners zu verfahren. Hierzu müssen die Hubeinrichtungen einen größeren Hub aufweisen, wie er für die üblichen Längen der Proben normalerweise erforderlich ist.

Derartige Hubeinrichtungen sind jedoch kostenintensiv und müssen im Brennschneidbetrieb regelmäßig gewartet werden. Neben dem größeren Zeitaufwand der entsteht, wenn die nicht im Einsatz befindlichen Schneidbrenner in eine von dem im Einsatz befindlichen Schneidbrenner entfernte Parkposition verfahren werden müssen, ist ein zusätzlicher Steueraufwand erforderlich. Bei manuell betätigtem Probenschneidbrenner ist ein zusätzliches Unterbrechen des Schneidablaufes erforderlich.

Der Erfindung liegt die Aufgabe zugrunde, die Schneiddüse eines nicht im Einsatz befindlichen Schneidbrenners vor den beim Schneiden erzeugten Schlacke- und Abbrandspritzern eines weiteren Schneidbrenners zu schützen.

Diese Aufgabe wird erfinungsgemäß durch die kennzeichnenden Merkmale des Anspruches 1 gelöst.

Besonders vorteilhaft ist die vorgesehene Düsenabdeckung beim autogenen Brennschneiden in Stranggieß-und Längsteilanlagen einsetzbar, wenn der eine Schneidbrenner ein Probenschneidbrenner zum Schneiden von Proben von dem Werkstück und der andere dicht neben dem Probenschneidbrenner angeordnete Schneidbrenner ein Hauptschneidbrenner zum Schneiden der Werkstücke ist.

Gemäß einem vorteilhaften Ausführungsbeispiel ist die Düsenabdeckung als Abdeckblech ausgebildet, welches an einem Ende einer Drehstange befestigt ist, wobei an dem anderen Ende der Drehstange ein Schwenkhebel angeordnet ist. Vorteilhaft ist die Drehstange in mindestens einer mit der Brennschneidmaschine verbundenen Lagerung gelagert und gegen lineare Bewegung gesichert. Der Schwenkhebel ist mit Abstand zur Befestigung der Drehstange mit der Kolbenstange eines Stellzylinders verbunden. Die Zylinderräume des Stellzylinders sind über jeweils eine Leitung mit einem elektrisch steuerbaren Magnetventil verbunden, welches abhängig von einem von der Brennschneidmaschinensteuerung vorgegebenen Steuersignal den Kolbenhub der Kolbenstange steuert. Hierzu öffnet bzw. schließt das vorzugsweise als Fünf-Zweiwegeventil ausgebildete Magnetventil den Durchfluß eines Fluids durch die Leitungen, so daß die Kolbenstange ein- oder ausfährt und die Drehstange in der Lagerung verschwenkt wird. Über die Verschwenkung der Drehstange wird das am freien Ende der Drehstange angebrachte-Abdeckblech zwischen das Werkstück und die Schneiddüse des sich nicht im Einsatz befindlichen Schneidbrenners geschwenkt, so daß dieser gegen Schlacke- und Abbrandspritzer während des Schneidens mit dem zweiten Schneidbrenner geschützt ist. Um vorteilhaft eine Beschädigung des Abdeckbleches bei einer Fehlbedienung bzw. Fehlsteuerung der Brennschneidmaschine zu verhindern, ist die Kolbenstange mit einem Endlagenschalter verbunden, der bei abgedeckter Schneiddüse das Einschalten der Schneidgase verriegelt. Selbstverständlich ist es auch vorteilhaft möglich, über den Endlagenschalter ein optisches Anzeigeelement anzusteuern, mittels dem der Bedienungsmann den Betriebszustand - abgedeckte Schneiddüse - erkennen kann. Vorteilhaft ist der Endlagenschalter als berührungsloser, d. h. kapazitiver Endlagenschalter, ausgebildet.

Die mit der Erfindung erzielten Vorteile bestehen insbesondere darin, daß mittels einer einfach aufgebauten und wartungsarmen Schwenkvorrichtung ein Verschmutzen der nicht im Einsatz befindlichen Schneiddüsen, ohne daß der Schneidbrenner bewegt werden muß, erreicht wird. Komplizierte, für die Schneidbrennerbewegung erforderliche genaue Führungen sowie Hubeinrichtungen können entfallen. Vorteilhaft kann mit der Düsenabdeckung abwechselnd die Schneiddüse des Haupt- oder Probenschneidbrenners abgedeckt werden.

Ein Ausführungsbeispiel der Erfindung ist in der Zeichnung dargestellt und wird im folgenden näher beschrieben.

Es zeigen:

Fig. 1 eine Seitenansicht der Schwenkvorrichtung;

Fig. 2 eine Draufsicht der Schwenkvorrichtung.

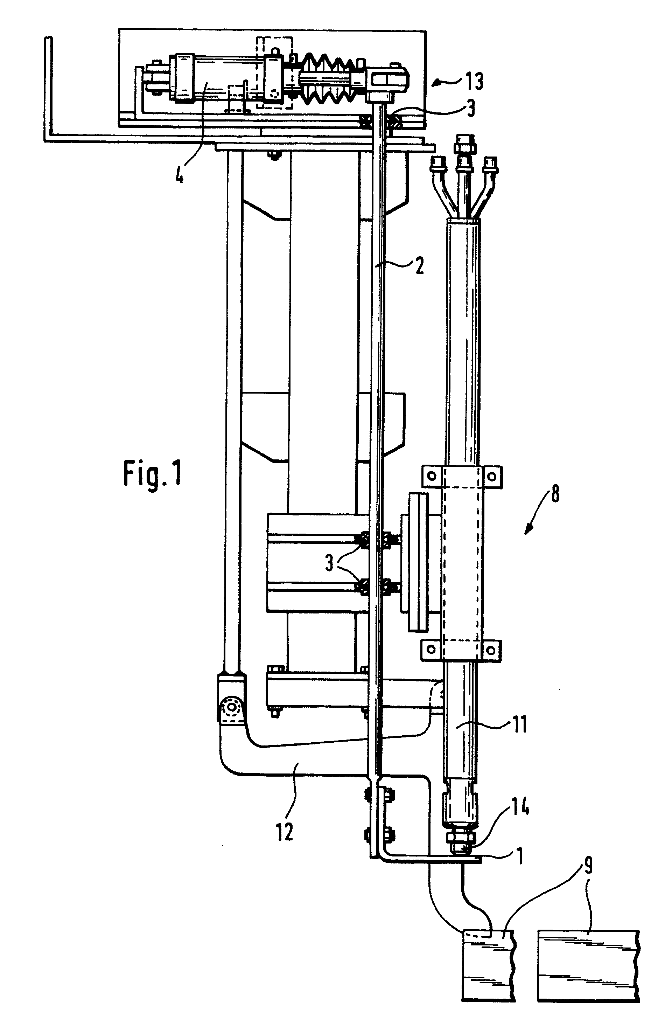

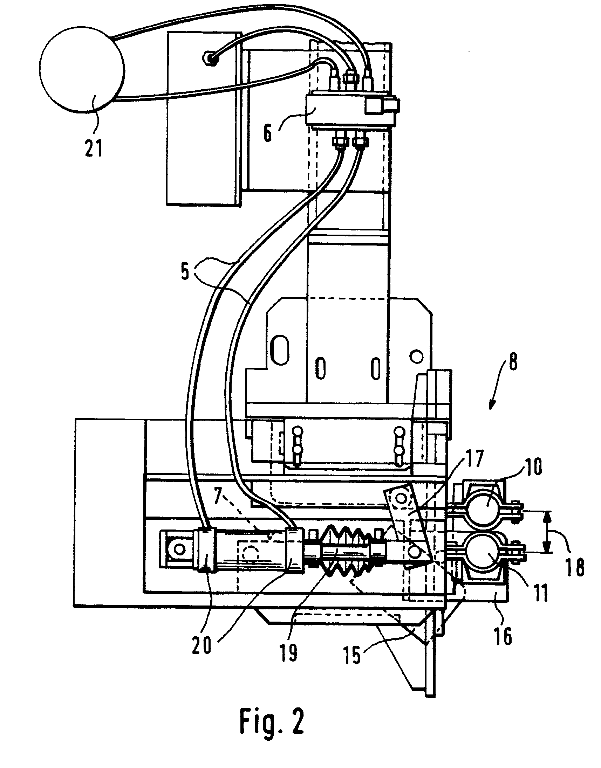

In den Figuren 1 und 2 ist ein Brenneraggregat 8 dargestellt, das Bestandteil einer Brennschneidmaschine zum Schneiden von Stranggußstücken 9 ist. In der Brennschneidmaschine ist dicht neben dem Hauptschneidbrenner 10 ein Probenschneidbrenner 11 zum Schneiden von Proben von den Stranggußstücken 9 angeordnet. Das an sich bekannte Brenneraggregat 8 ist in der bekannten Weise verfahrbar an dem Querträger der Brennschneidmaschine angeordnet. Über eine nicht dargestellte pneumatisch betätigbare Aufdrückschwinge wird die Brennschneidmaschine auf das Werkstück aufgeklemmt und von dem Strang mitgenommen. Mit dem Antasthebel 12 werden die Schneidbrenner 10, 11 relativ zur Strangkante positioniert.

Bevorzugt ist dem Probenschneidbrenner 11 eine Schwenkvorrichtung 13 mit einer unterhalb der Ebene der Schneidbrennerdüse vorgesehenen Düsenabdeckung 1 zugeordnet. Die vorteilhaft als Abdeckblech ausgebildete Düsenabdeckung 1 ist von einem Bereich (Stellung 15 der Düsenabdeckung 1 in Fig. 2) außerhalb des aus der Schneiddüse 14 ausströmenden Gases während des Schneidens in einen Bereich (Stellung 16 der Düsenabdeckung 1 in Fig. 2) vor der Schneiddüse 14 während der Arbeitsruhe schwenkbar. In dieser Stellung 16 deckt die Düsenabdeckung 1 mindestens die Gasaustrittsöffnungen der Schneiddüse 14 ab.

Die Düsenabdeckung 1 ist am unteren freien Ende einer Drehstange 2 befestigt, an deren anderen Ende ein Schwenkhebel 17 befestigt ist. Die Drehstange 2 ist in mindestens einer vorzugsweise jedoch zwei mit der Brennschneidmaschine verbundenen Lagerungen 3 schwenkbar gelagert und gegen lineare Bewegung gesichert. Im Abstand 18 zur Befestigung der Drehstange 2 ist der Schwenkhebel 17 mit der Kolbenstange 19 eines Stellzylinders 4 verbunden. Die Zylinderräume 20 des Stellzylinders sind über jeweils eine Leitung 5 mit einem Fünf-Zweiwegemagnetventil 6 verbunden, dessen Eingänge vorzugsweise mit einer Druckluftquelle 21 und dessen Magnet vorzugsweise mit der nicht näher dargestellten Brennschneidmaschinensteuerung verbunden ist. Der Kolbenstange 19 ist vorzugsweise ein berührungsloser Endlagenschalter 7 zugeordnet, der das Einschalten der Schneidgase bei abgedeckter Schneiddüse 14 verriegelt.

Die Brennerabdeckung arbeitet wie folgt:

Ist der Probenschneidbrenner 11 nicht im Einsatz, ist die Düsenabdeckung 1, befestigt an der Drehstange 2, unter die Schneiddüse (Stellung 16) geschwenkt.

Wird der Probenschneidbrenner 11 benötigt wird das Fünf-Zweiwegemagnetventil 6 mittels eines von der Brennschneidmaschinensteuerung vorgegebenen Steuersignals elektrisch erregt und Druckluft strömt durch die Luftleitungen 5 zu einem der Zylinderräume 20 des Stellzylinders 4. Die ausfahrende Kolbenstange 19 verschwenkt die Drehstange 2 in den Lagerungen 3 und schwenkt die Düsenabdeckung 1 unter der Schneiddüse 14 weg. Nach Beendigung der Kolbenbewegung wird der berührungslose, vorzugsweise kapazitive Endlagenschalter 7 betätigt, der das Einschalten der Schneidgase verriegelt hatte.

Gemäß einem weiteren vorteilhaften Ausführungsbeispiel kann die Düsenabdeckung als rotierende Scheibe ausgebildet sein, in der eine dem Schneiddüsendurchmesser entsprechende Öffnung vorgesehen ist, die jeweils unter dem in Einsatz bringbaren Schneidbrenner angeordnet wird.

**Patentansprüche**

1. Brennschneidmaschine zum Schneiden von Werkstücken, insbesondere von Stranggußstücken mit mindestens zwei Schneidbrennern, dadurch gekennzeichnet, daß den Schneidbrennern (10, 11) eine Schwenkvorrichtung (13) mit einer unterhalb der Ebene der Schneidbrennerdüse (14) vorgesehenen Düsenabdeckung (1) zugeordnet ist, welche von einem Bereich (15) außerhalb des während des Schneidens aus der Schneiddüse ausströmenden Gases in einen Bereich (16) vor der Schneiddüse (14) schwenkbar ist und in dieser Stellung (16) mindestens die Gasaustrittsöffnungen derselben abdeckt, so daß die Schneiddüse (14) eines nicht im Einsatz befindlichen Schneidbrenners vor dem beim Schneiden erzeugten Schlacke- und Abbrandspritzern eines weiteren Scneidbrenners geschützt wird.

2. Brennschneidmaschine nach Anspruch 1, dadurch gekennzeichnet, daß der eine Schneidbrenner (11) ein Probenschneidbrenner zum Schneiden von Proben von den Werkstücken (9) und der andere Schneidbrenner (10) ein Hauptschneidbrenner zum Schneiden der Werkstücke (9) ist.

3. Brennschneidmaschine nach Anspruch 1 oder 2,
dadurch gekennzeichnet,
daß die Düsenabdeckung (1) als Abdeckblech ausgebildet ist, welches an einem Ende einer Drehstange (2) befestigt und an deren anderen Ende ein Schwenkhebel (17) angeordnet ist.

4. Brennschneidmaschine nach einem der Ansprüche 1 bis 3,
dadurch gekennzeichnet,
daß die Drehstange (2) in mindestens einer mit der Brennschneidmaschine verbundenen Lagerung (3) drehbar gelagert und gegen lineare Bewegung gesichert ist und der Schwenkhebel (17) im Abstand (18) zur Befestigung der Drehstange (2) mit der Kolbenstange (19) eines Stellzylinders (4) verbunden ist.

5. Brennschneidmaschine nach einem der Ansprüche 1 bis 4,
dadurch gekennzeichnet,
daß die Zylinderräume (20) des Stellzylinders (4) über jeweils eine Leitung (5) mit einem elektrisch steuerbaren Magnetventil (4) verbunden sind und abhängig von einem vorgegebenen Steuersignal an das Magnetventil (4) in einem der Zylinderräume (20) ein Fluid strömt, so daß die Kolbenstange (19) ein-oder ausfährt und die Drehstange (2) in der Lagerung (3) verschwenkt.

6. Brennschneidmaschine nach einem der Ansprüche 1 bis 5,
dadurch gekennzeichnet,
daß die Kolbenstange mit einem Endlagenschalter (7) verbunden ist, der bei abgedeckter Schneiddüse (14) das Einschalten der Schneidgase verriegelt.

7. Brennschneidmaschine nach einem der Ansprüche 1 bis 6,
dadurch gekennzeichnet,
daß der Endlagenschalter (7) als kapazitiver Schalter ausgebildet ist.

## Claims

1. Flame-cutting machine for cutting workpieces, in particular continuous castings, having at least two cutting torches, characterised in that a swivel device (13) having a nozzle cover (1) provided below the plane of the cutting-torch nozzle (14) is allocated to the cutting torches (10, 11) which swivel device (13) can be swivelled from an area (15) outside the gas flowing out of the cutting nozzle during the cutting into an area (16) in front of the cutting nozzle (14) and in this position (16) covers at least the gas-discharge openings of the same so that the cutting nozzle (14) of a cutting torch not in use is protected from slag and consumption spatter, produced during the cutting, of a further cutting torch.

2. Flame-cutting machine according to Claim 1, characterised in that one cutting torch (11) is a test specimen cutting torch for cutting test specimens from the workpieces (9) and the other cutting torch (10) is a main cutting torch for cutting the workpieces (9).

3. Flame-cutting machine according to Claim 1 or 2, characterised in that the nozzle cover (1) is designed as a cover plate which is fastened to one end of a rotary bar (2) and on the other end of which a swivel lever (17) is arranged.

4. Flame-cutting machine according to one of Claims 1 to 3, characterised in that the rotary bar (2) is rotatably mounted and secured against linear movement in at least one bearing arrangement (3) connected to the flame-cutting machine, and the swivel lever (17) is connected to the piston rod (19) of a servo cylinder (4) at a distance (18) for the attachment of the rotary bar (2).

5. Flame-cutting machine according to one of Claims 1 to 4, characterised in that the cylinder spaces (20) of the servo cylinder (4) are each connected via a line (5) to an electrically controllable solenoid valve (4), and, dependent upon a preset control signal to the solenoid valve (4), a fluid flows in one of the cylinder spaces (20) so that the piston rod (19) retracts or extends and the rotary bar (2) swivels in the bearing arrangement (3).

6. Flame-cutting machine according to one of Claims 1 to 5, characterised in that the piston rod is connected to a limit switch (7) which bars the switching-on of the cutting gases when cutting nozzle (14) is covered.

7. Flame-cutting machine according to one of Claims 1 to 6, characterised in that the limit switch (7) is designed as a capacitive switch.

## Revendications

1. Installation d'oxycoupage pour découper des pièces à usiner notamment des cordons de coulée en continu, avec au moins deux chalumeaux, installation caractérisée par un dispositif de pivotement (13) qui est associé aux chalumeaux (10, 11), ce dispositif comportant un capot de buse (1) prévu sous le plan de la buse d'oxycoupage (14), ce capot pouvant basculer d'une zone (15) à l'extérieur de la veine de gaz qui s'échappe de la buse d'oxycoupage pendant son fonctionnement jusque dans une zone (16) devant la buse d'oxycoupage (14) et recouvre dans cette position (16), au moins les orifices de sortie de gaz pour que la buse d'oxycoupage (14) d'un autre chalumeau d'oxycoupage au repos soit protégée contre les scories et les projections d'un chalumeau d'oxycoupage en fonctionnement.

2. Installation d'oxycoupage selon la revendication 1, caractérisée en ce que l'un des chalumeaux (11) est un chalumeau d'oxycoupage d'échantillon pour découper des échantillons des pièces à usiner (9) et l'autre chalumeau d'oxycoupage (10) est un chalumeau d'oxycoupage principal pour découper des pièces (9).

3. Installation d'oxycoupage selon la revendication 1 ou 2, caractérisée en ce que le capot de buse (1) est en forme de tôle de recouvrement qui est fixée à une extrémité d'un axe tournant (2) dont l'autre extrémité comporte un levier de pivotement (17).

4. Installation d'oxycoupage selon l'une des revendications 1 à 3, caractérisée en ce que l'axe tournant (2) est monté à rotation dans au moins un palier (3) relié à l'installation d'oxycoupage et cet axe est bloqué en translation, le levier (17) étant relié à la distance (18) pour fixer l'axe de rotation (2) à la tige de piston (19) d'un vérin de commande (4).

5. Installation d'oxycoupage selon l'une des revendications 1 à 4, caractérisée en ce que les chambres (20) du cylindre du vérin de commande (4) sont reliées par une conduite (5) respective à une électrovanne (4) à commande électrique et en fonction d'un signal de commande prédéterminé appliqué à l'électrovanne (4), l'une des chambres (20) reçoit un fluide pour que la tige de piston (19) se déploie ou se rétracte et bascule l'axe de rotation (2) dans le palier (3).

6. Installation d'oxycoupage selon l'une des revendications 1 à 5, caractérisée en ce que la tige de piston est reliée à un commutateur de fin de course (7) qui verrouille l'alimentation en gaz d'oxycoupage lorsque la buse d'oxycoupage (14) est capotée.

7. Installation d'oxycoupage selon l'une des revendications 1 à 6, caractérisée en ce que le commutateur de fin de course (7) est un commutateur capacitif.

EP 0 299 210 B1

Fig.1

6

Fig. 2